# EUROPÄISCHE PATENTSCHRIFT

(11) **EP 0 576 932 B1**
(45) Veröffentlichungstag und Bekanntmachung des Hinweises auf die Patenterteilung: **10.11.1999**
(21) Anmeldenummer: 93109732.3
(22) Anmeldetag: 18.06.1993
(51) Int. Cl.: G01N 27/16

(54) **Regel- und Auswerteschaltung für einen Wärmetönungssensor**
Control and evaluation circuit for a heat tone sensor
Circuit de commande et d'évaluation pour un capteur de chaleur de réaction

(30) Priorität: 03.07.1992 DE 4221922
(43) Veröffentlichungstag der Anmeldung: 05.01.1994
(73) Patentinhaber: ROBERT BOSCH GMBH, 70442 Stuttgart (DE)
(72) Erfinder: Lenfers, Martin , Dipl.-Ing., D-71665 Vaihingen/Enz 2 (DE); Riegel, Johann, Dr. Dipl.-Ing., D-71696 Moeglingen (DE)

(56) Entgegenhaltungen:
- EP-A- 0 314 919
- DD-A- 271 379
- DE-A- 3 844 023
- DE-A- 4 020 385
- DE-A- 4 025 875
- FR-A- 2 670 291
- GB-A- 2 091 882
- US-A- 4 541 988
- US-A- 4 870 025

## Beschreibung

### Stand der Technik

Die Erfindung geht aus von einer Regel- und Auswerteschaltung für einen Wärmetönungssensor nach der Gattung des Hauptanspruchs.

Zur Analyse von Gasen, besonders zur Bestimmung des Anteils an brennbaren Gasen in sauerstoffhaltigen Gasen werden Wärmetönungssensoren eingesetzt, die zwei miteinander in Serie geschaltete und von einem Strom durchflossene temperaturabhängige Widerstände enthalten. Ein Widerstand ist mit einer katalytisch aktiven Oberfläche, der zweite mit einer katalytisch inaktiven Oberfläche versehen. Dabei dient der mit der katalytisch aktiven Oberfläche versehene Widerstand als Meßwiderstand und der andere als Referenzwiderstand, wobei Meßwiderstand und Referenzwiderstand dem zu untersuchenden Gas ausgesetzt sind.

Falls in einem Sauerstoffüberschuß enthaltenden Meßgas reaktionsfähige Bestandteile, z.B. CO oder andere oxidierbare Gase oder reduzierbare, z.B. NOx vorhanden sind, treten an der katalytisch aktiven Oberfläche des Meßwiderstands Wärmereaktionen auf, die die Temperatur des Meßwiderstandes erhöhen, so daß sich der Wert des Meßwiderstandes verändert. Diese Änderung wird in einer nachfolgenden Auswerteschaltung untersucht und zur Ermittlung des Gehaltes an oxidierbaren Gasen verwendet.

Wärmetönungssensoren werden beispielsweise eingesetzt, um die von Brennkraftmaschinen erzeugten Abgase wie Kohlenmonoxid, Stickoxide sowie unverbrannte oder teilverbrannte Kohlenwasserstoffe zu bestimmen, damit die Brennkraftmaschine so betrieben werden kann, daß der Ausstoß von Schadstoffen möglichst gering gehalten wird.

Ein solcher Wärmetönungssensor, ist beispielsweise aus der DE-OS 40 20 385 bekannt. Dabei hat eine Ausführungsform des bekannten Sensors zwei Temperaturfühlerelemente, die beide von einem Widerstandsheizer beheizt werden. Eines der Temperaturfühlerelemente erfährt eine zusätzliche Aufheizung durch die an seiner Oberfläche ablaufenden exothermen Reaktionen, während das andere Temperaturfühlerelement so angeordnet bzw. geschützt wird, daß keine exothermen Reaktionen ablaufen.

Dieser bekannte Wärmetönungssensor hat jedoch den Nachteil, daß keine derartige Temperaturregelung durchgeführt wird, die sicherstellen könnte, daß die Temperatur des Referenztemperaturfühlerelementes konstant bleibt. Bei Temperaturänderunge im zu analysierenden Gas während des Messens können daher Ungenauigkeiten auftreten.

Aus der DE-OS 38 44 023 ist ein weiterer Sensor zu Bestimmung der Gaskonzentration in einem Gasgemisch mit Hilfe der Messung der Wärmetönung bei der Oxidation brennbarer Gase bekannt. Bei diesem Sensor werden Dünnfilmwiderstände, die als Meß- und Heizwiderstände dienen, eingesetzt, sie sind mit einer Schutzschicht abgedeckt, so daß sie nicht mit dem oxidierbaren Gas in Berührung kommen.

Auf dem mittels der Dünnschichtwiderstände aufheizbaren Bereich ist eine katalytisch aktive Schicht aufgebracht, in der die Qxidation abläuft und eine zusätzliche Erwärmung verursacht. Aus dieser zusätzlichen Erwärmung wird die gesuchte Gaskonzentration ermittelt.

Eine Regel- und Auswerteschaltung für einen Wärmetönungssensor die die Merkmale des Oberbegriffs des Anspruchs 1 aufweist, ist aus DE-A1-4 025 875 bekannt.

### Vorteile der Erfindung

Die erfindungsgemäße Regel- und Auswerteschaltung für einen Wärmetönungssenor mit den Merkmalen des Hauptanspruchs hat den Vorteil, daß eine permanente Messung des Gehaltes an oxidierbaren Gasen des zu untersuchenden Mediums möglich ist, da eine getrennte Temperaturmessung nicht erforderlich ist. Damit ist auch sichergestellt, daß keine Ungenauigkeiten durch Temperaturverschiebungen während der Meßzeit auftreten. Dies wird sichergestellt, indem sowohl der Meß- als auch der vom zu analysierenden Gas geschützte Referenzwiderstand mit Hilfe einer geregelten Heizeinrichtung geheizt werden, wobei diese Heizung so geregelt wird, daß der Wert des Referenzwiderstandes und damit die Temperatur stets konstant bleibt. Damit ist die sich einstellende Änderung des Wertes des Meßwiderstandes nur noch abhängig von der Wärmetönung und kann damit besonders vorteilhaft zur Bestimmung des Gehaltes an oxidierbaren Gasen herangezogen werden.

Weiterhin ist vorteilhaft, daß in der zum Wärmetönungssensor gehörenden Auswerteschaltung Spannungen gemessen werden, dies gewährleistet eine besonders sichere und zuverlässige Messung.

Weitere Vorteile der Erfindung sind durch die in den Unteransprüchen angegebenen Maßnahmen erzielbar, dabei ist besonders vorteilhaft, daß beide Widerstände, der Meß- und der Referenzwiderstand als NTC- oder PTC-Widerstand gefertigt sein können, womit ein besonders kostengünstiger Sensor erhalten wird.

Die gleichmäßige Beheizung des Meß- und Referenzwiderstandes ermöglicht in vorteilhafter Weise eine Messung, die unabhängig von der Temperatur des Gases und unabhängig von möglicherweise auftretenden Strömungen ist.

### Zeichnung

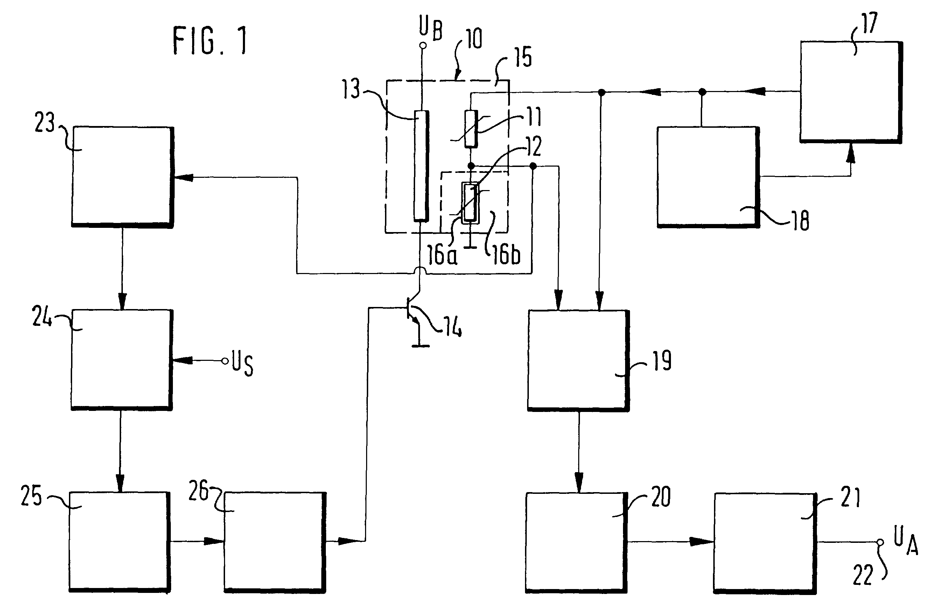

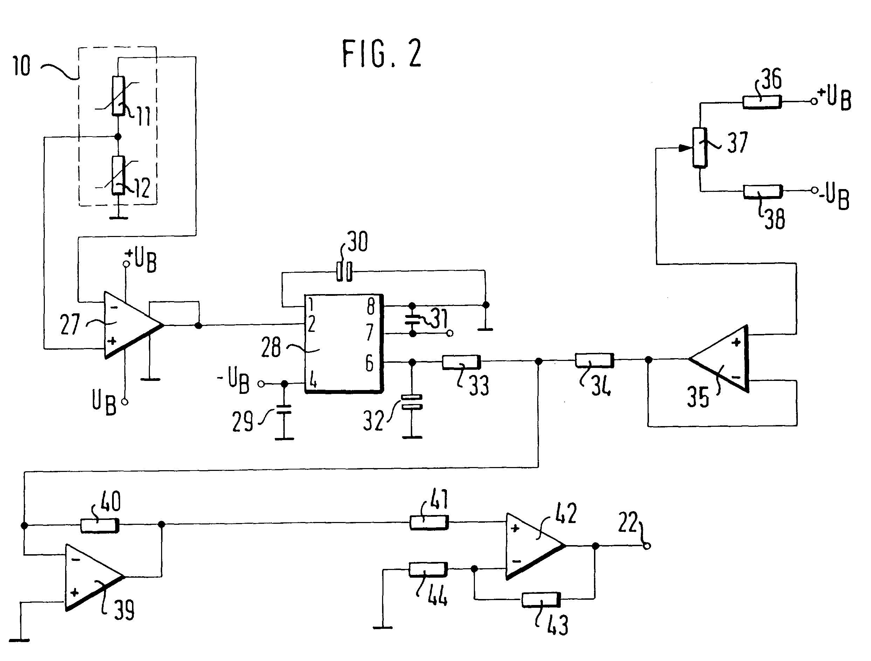

Ein Ausführungsbeispiel der Erfindung ist in der Zeichnung dargestellt und wird in der folgenden Beschreibung näher erläutert. Dabei zeigt Figur 1 eine Übersicht über den Sensor und die zugehörige Auswerteschaltung, wobei diese Auswerteschaltung als Blockschaltbild dargestellt ist, in den Figuren 2 bis 4 sind einige dieser Blöcke als konkrete Schaltungen dargestellt.

### Beschreibung des Ausführungsbeispiels

In Figur 1 ist der Wärmetönungssensor mit 10 bezeichnet. Er umfaßt einen Meßwiderstand 11 sowie einen zu diesem in Serie geschalteten Referenzwiderstand 12 sowie eine diesen beiden Widerständen zugeordnete Heizeinrichtung 13, die einerseits an die Batteriespannung U_{B} angeschlossen ist und andererseits über einen Transistor 14 an Masse liegt. Die Widerstände 11 und 12 sind NTC-Widerstände, auch andere temperaturabhängige Widerstände, z.B PTC-Widerstände wären einsetzbar, allerdings mit entsprechend abgewandelter Auswerteschaltung.

Der Sensor 10 ist von einem Gehäuse 15 umgeben, das so ausgebildet ist, daß das zu analysierende Gas den Meßwiderstand 11 und den Referenzwiderstandes 12 umgeben kann. Der Meßwiderstand 11 ist dabei an der Oberfläche katalytisch aktiv, während der Referenzwiderstand passiviert ist, z.B. mittels einer katalytisch inaktiven Schicht 16a.

In einer weiteren Ausführungsform ist das Gehäuse 15 nur im Bereich des Meßwiderstandes 11 gasdurchläßig, während es im Bereich des Referenzwiderstandes 12 nicht gasdurchlässig ist. Dabei ist der nicht gasdurchlässige Teil des Gehäuses mit 16b bezeichnet.

Ein Wechselstromgenerator 17 ist mit einer Seite des Meßwiderstandes 11 verbunden und außerdem mit einer Spannungsbegrenzungseinrichtung 18, die einen weiteren Ausgang aufweist, der mit einem weiteren Eingang des Wechselstromgenerators 17 in Verbindung steht.

Von der Verbindung zwischen dem Wechselstromgenerator 17 und dem Meßwiderstand 11 führt eine weitere Verbindung zu einer Differenzbildungsstufe 19, deren zweiter Eingang mit dem Verbindungspunkt zwischen dem Meßwiderstand 11 und dem Referenzwiderstand 12 in Verbindung steht.

Weiterhin ist die Differenzbildungsstufe 19 über einen Offsetabgleich 20 und einem Ausgangsverstärker 21 mit der Klemme 22 verbunden, an der das Ausgangssignal U_{A}, das die gesuchte Meßgröße repräsentiert, entsteht.

Vom Verbindungspunkt zwischen dem Meßwiderstand 11 und dem Referenzwiderstand 12 führt eine weitere Verbindung zu einem Block 23, in dem eine Effektivwertbildung der am Referenzwiderstand abfallenden Spannung vorgenommen wird, dieser Effektivwert wird einer Soll-/Ist-Vergleichsstufe zugeführt, der außerdem noch ein Sollwert U_{S} zugeführt wird.

Die Soll-/Ist-Vergleichsstufe 24 ist weiterhin mit einem spannungsgesteuerten Generator 25 verbunden, der über eine Endstufe 26 auf die Basis des Transistors 14 einwirkt.

In Figur 2 ist beispielhaft ein Teil der Auswerteschaltung in Form einer konkreten Schaltungsanordnung dargestellt. Dabei ist zu erkennen, daß der Spannungsteiler mit dem Meßwiderstand 11 und dem Referenzwiderstand 12 des Sensors 10 mit den beiden Eingängen eines Differenzverstärkers 27 verbunden ist, wobei eine Seite des Meßwiderstandes 11 mit dem invertierenden Eingang des Differenzverstärkers 27 und die andere Seite des Meßwiderstandes 11, die auch mit dem Referenzwiderstand 12 verbunden ist, auf den nicht invertierenden Eingang des Differenzverstärkers 27 geführt ist. Der Differenzverstärker 27 wird zwischen einer positiven Spannung +U_{B} und einer negativen Spannnung -U_{B} betrieben, sein Ausgang ist mit einem integrierten Schaltkreis (IC) 28 verbunden, der zusammen mit der zugehörigen Beschaltung der Effektivwertbildungsstufe 23 entspricht.

Diese Beschaltung besteht aus insgesamt vier Kondensatoren 29, 30, 31, 32, die zwischen den einzelnen Eingängen des IC bzw. zwischen einem Eingang des IC und Masse liegen. Außerdem ist der IC 28 noch an positive und negative Batteriespannung +U_{B}, -U_{B} angeschlossen.

Der Ausgang 8 des IC 28 führt über einen Widerstand 33 auf den invertierenden Eingang des Operationsverstärkers 39, des mit den Widerständen 33, 34 und 40 einen invertierenden Addierer bildet.

Der invertierende Eingang des Operationsverstärkers 39 ist über den Widerstand 40 mit dem Ausgang verbunden, während der nicht invertierende Eingang auf Masse liegt. Dieser Teil der Schaltungsanordnung dient als Offset-Addierer.

Der Ausgang des, die Offsetspannung erzeugenden Operationsverstärkers 35, dessen nicht invertierender Eingang mit einem zwischen positiver und negativer Batteriespannung liegenden Spannungsteiler 36, 37, 38 verbunden ist, wobei der Widerstand 37 ein Potentiometer ist, ist über den Widerstand 34 ebenfalls mit dem invertierenden Eingang des Operationsverstärkers 39 verbunden. Der invertierende Eingang des Operationsverstärkers 35 ist weiterhin mit seinem Ausgang verbunden und bildet somit einen Spannungsfolger.

Der Ausgang des Operationsverstärkers 39 ist über einen Widerstand 41 mit dem nicht invertierenden Eingang eines Operationsverstärkers 42 verbunden, dessen Ausgang der eigentliche Signalausgang 22 ist.

Zwischen dem Ausgang des Operationsverstärkers 42 und den invertierenden Eingang liegt ein weiterer Widerstand 43, weiterhin ist der invertierende Eingang über einen Widerstand 44 mit Masse verbunden. Der Operationsverstärker 43 samt Beschaltung stellt die Endverstärkungsstufe bzw. den Ausgangsverstärker dar.

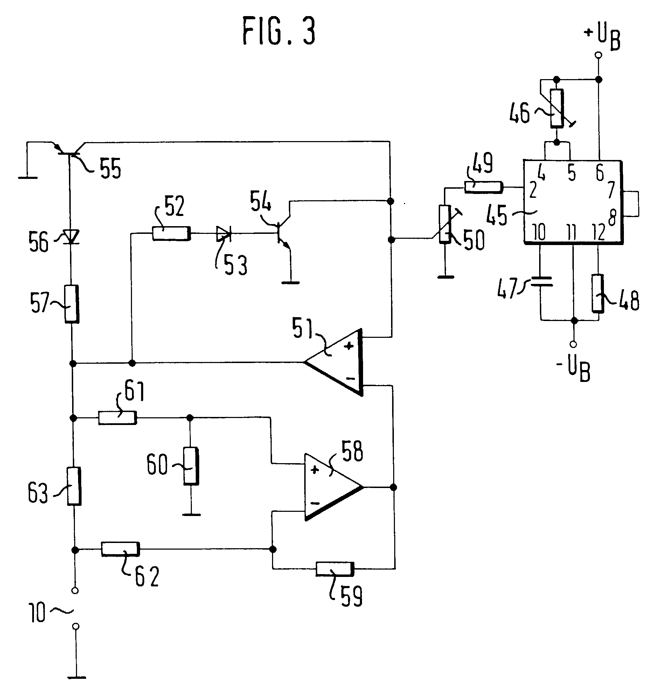

In Figur 3 ist der Wechselstromgenerator 17 sowie die Spannungsbegrenzung 18 als konkrete Schaltungsanordnung dargestellt. Dabei umfaßt der Wechselstromgenerator 17 einen integrierten Schaltkreis (IC) 45, der zwischen positiver und negativer Batteriespannung +U_{B}, -U_{B} betrieben wird und weiterhin an einen variablen Widerstand 46, einen Kondensator 47 und einen Widerstand 48 angeschlossen ist.

Der Ausgang des integrierten Schaltkreises 45 ist über einen Spannungsteiler, bestehend aus einem Widerstand 49 und einem variablen Widerstand 50, z.B. dem Schleifer eines Potentiometers, mit einem Schaltungsteil verbunden, das der Spannungsbegrenzung 18 entspricht. Die Beschaltung ist so, daß der Widerstand 50 zum einen mit dem nicht invertierenden Eingang eines Operationsverstärkers 51 verbunden ist, dessen Ausgang über einen Widerstand 52, eine Diode 53 sowie einen Transistor 54 wiederum mit dem Schleifer des Potentiometers 50 verbunden ist. Dabei ist die Beschaltung des Transistors 54 so, daß die Kathode der Diode 53 zur Basis des Transistors 54 führt, während dessen Emitter auf Masse liegt und dessen Kollektor zum Schleifer des Widerstands 50 geführt wird. Die Bauelemente 54, 53 und 52 dienen zur Spannungsbegrenzung der positiven Halbwelle, die vom Sinusgenerator geliefert wird.

Die Spannungsbegrenzung der negativen Halbwelle wird mit Hilfe des Transistors 55, der Diode 56 und des Widerstandes 57 durchgeführt, der Kollektor des Transistors 55 ist dazu mit dem Widerstand 50 verbunden, während sein Emitter auf Masse liegt. Die Basis des Transistors 55 ist über die Diode 56 und den Widerstand 57 mit dem Ausgang des Operationsverstärkers 51 verbunden.

Zur Strom-Konstantregelung ist der Ausgang eines weiteren Operationsverstärkers 58 mit dem invertierenden Eingang des Operationsverstärkers 51 verbunden, wobei der Ausgang des Operationsverstärkers 58 zusätzlich über einen Widerstand 59 mit seinem invertierenden Eingang in Verbindung steht, während der nicht invertierende Eingang über einen Widerstand 60 mit Masse und über einen weiteren Widerstand 61 mit dem Ausgang des Operationsverstärkers 51 und mit den Widerständen 52 und 57 verbunden ist.

Der Sensor 10 ist über einen Strommeßwiderstand 63 mit dem Ausgang des OP 51 und mit den Widerständen 61, 57 und 52, sowie über den Widerstand 62 mit dem invertierenden Eingang des OP 58 verbunden.

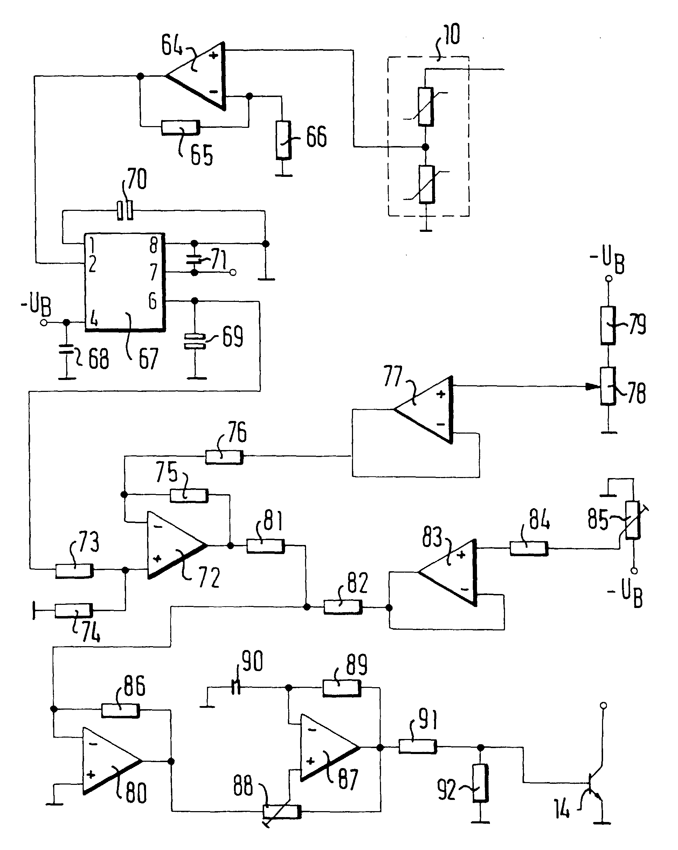

In Figur 4 ist schließlich die Heizungsansteuerung zur Konstanthaltung der Temperatur des Referenzwiderstandes als konkrete Schaltungsanordnung dargestellt. Diese Schaltungsanordnung weist einen ersten Operationsverstärker 64 auf, der mit dem Verbindungspunkt zwischen Meß- und Referenzwiderstand 11, 12 des Sensors 10 verbunden ist, wobei zwischen dem Ausgang des Operationsverstärkers 64 und dem invertierenden Eingang ein Widerstand 65 angeordnet ist und der invertierende Eingang weiterhin über einen Widerstand 66 auf Masse liegt. Der Operationsvestärker 64 samt Beschaltung dient der Verstärkung und zur Entkopplung der nachfolgenden Schaltung.

Der Ausgang des Operationsverstärkers 64 ist mit einem Schaltungsteil verbunden, der zur Effektivwertbildung dient und den Block 23 der Figur 1 entspricht. Er setzt sich zusammen aus einem integrierten Schaltkreis (IC) 67, der mit -U_{B}, +U_{B} und Masse in Verbindung steht und außerdem die Kondensatoren 68, 69, 70 und 71 aufweist, die entweder zwischen bestimmten Eingängen des IC oder zwischen einem Eingang und Masse liegen.

Die Soll-/Ist-Wertstufe 24, die mit dem IC 67 verbunden ist, weist einen Operationsverstärker 72 auf, dessen nicht invertierender Eingang über einen Widerstand 73 mit dem IC 67 verbunden ist und über den Widerstand 74 auf Masse liegt. Ein Rückkoppelwiderstand 75 liegt zwischen dem invertierenden Eingang und dem Ausgang des Operationsverstärkers 72, der invertierende Eingang ist weiterhin über einen Widerstand 76 mit einem Operationsverstärker 77 verbunden, dessen nicht invertierender Eingang mit einem Potentiometer 78 verbunden ist, das Bestandteil eines Spannungsteilers ist, der zwischen -U_{B} und Masse liegt und noch einen Widerstand 79 umfaßt.

Der Operationsverstärker 77 sowie der Spannungsteiler 78, 79 dienen zur Sollwertvorgabe für den Soll-/Ist-Vergleich.

Der spannungsgesteuerte Generator 25 enthält einen ersten Operationsverstärker 80, dessen invertierender Eingang zum einen über den Widerstand 81 mit der Soll-/Ist-Wertstufe verbunden ist und über einen Widerstand 82 mit dem Ausgang eines Operationsverstärkers 83 verbunden ist.

Der Operationsverstärker 83, dessen nicht invertierender Eingang über einen Widerstand 84 mit einem Potentiometer 85, das zwischen -U_{B} und Masse liegt, verbunden ist, bildet den Offset für den spannungsgesteuerten Generator 25. Dieser weist neben dem bereits erwähnten Operationsverstärker 80 mit einem Rückkoppelwiderstand 86 einen weiteren Operationsverstärker 87 auf, dessen nicht invertierender Eingang mit dem Abgriff eines Potentiometers 88 verbunden ist, das zwischen dem Ausgang des Operationsverstärkers 80 und dem Ausgang des Operationsverstärkers 87 liegt. Zwischen dem invertierenden Eingang des Operationsverstärkers 87 und seinem Ausgang befindet sich ein Widerstand 89, weiterhin ist der invertierende Eingang über einen Kondensator 90 auf Masse gelegt.

Der Ausgang des Operationsverstärkers 87, an dem ein Takt mit variablem Ein-/Aus-Verhältnis entsteht, ist über den Widerstand 91 mit der Basis des Transistors 14 verbunden, welche wiederum über den Widerstand 92 mit Masse verbunden ist.

Der Transistor 14 stellt die Endstufe dar, die letztendlich zum Heizer 13 führt, wobei der Kollektor des Transistors 14 zum Heizer und der Emitter auf Masse führt.

### Funktionsweise

Der Wärmetönungssensor 10 wird so eingesetzt, daß der Meßwiderstand 11 mit katalytisch aktiver Oberfäche, üblicherweise ein NTC-Widerstand, dem zu messenden Medium, also dem Gas beispielsweise im Auspuff eines Kraftfahrzeugs ausgesetzt ist. Der Referenzwiderstand 12 mit passivierter Oberfläche ist in räumlicher Nähe des Meßwiderstandes 11 angeordnet, jedoch so, daß kein Wärmefluß zwischen den Widerständen möglich ist. Beide Widerstände werden vom Gas umspült, bei vorhandener Konvektion wirkt diese daher auch auf beide Widerstände und verursacht keine Meßfehler.

Der Heizer 13 befindet sich so nahe an den beiden Widerständen 11 und 12, daß diese, sofern keine Gasreaktionen auftreten, sich auf derselben Temperatur befinden. Treten am Meßwiderstand Gasreaktionen auf, erhöht sich die Temperatur des Meßwiderstandes, so daß sich die Widerstands- und damit auch die Spannungsverhältnisse am Spannungsteiler 11, 12 verändern, diese Änderungen werden zur Bestimmung der oxidierbaren Gasbestandteile herangezogen.

Durch Bestromung des Spannungsteilers 11, 12 mittels eines vom Wechselstromgenerator 17 erzeugten konstanten Wechselstromes, der im Spannungsbegrenzer 18 auf Werte begrenzt wird, die keine Überhitzung oder sonstige zu starke Belastungen des Sensors verursachen können, ist es möglich, direkt den Spannungsabfall sowohl am Meßwiderstand 11 als auch am Referenzwiderstand 12 zu messen und damit ein von der Konzentration oxidierbarer Gase abhängiges Ausgangssignal aus gemessenen Spannungsänderungen zu gewinnen.

Wird die Temperatur des Referenzwiderstandes durch Regelung der Beheizung mit dem Heizer 13 auf einen konstanten Wert geregelt, ist die Widerstandsänderung am Meßwiderstand 11 nur noch von der Reaktionswärme abhängig.

Die Regelung der Temperatur am Referenzwiderstand wird durchgeführt, indem der am Referenzwiderstand 12 auftretende Spannungsabfall nach einer Effektivwertbildung als Ist-Wert der Soll-/Ist-Wertstufe 24 zugeführt wird, wobei als Soll-Wert eine vorgebbare Spannung zugeführt wird, die in der Soll-Wert-Vorgabestufe mit dem Operationsverstärker 77 sowie den Spannungsteiler 78 und 79 gebildet wird.

Der Soll-/Ist-Vergleich wird dem spannungsgesteuerten Generator 25 zugeführt und verursacht an seinem Ausgang eine Spannung mit variablem Ein-/Aus-Verhältnis, wobei dieses Verhältnis davon abhängt, wie die vom Soll-/Ist-Vergleich gebildete Spannung ist.

Beginnt die Temperatur am Referenzwiderstand 12 abzusinken, verändert sich das Ein-/Aus-Verhältnis derart, daß die Einschaltphase verlängert wird, womit der Transistor 14 letztendlich länger leitend bleibt und damit die Heizleistung des Heizers 13 erhöht wird, so daß die Temperatur im Referenzwiderstand 12 wieder steigt. Bei zu hoher Temperatur am Referenzwiderstand 12 treten die umgekehrten Verhältnisse ein, damit ist eine zuverlässige Temperaturregelung für den Referenzwiderstand und damit auch den Meßwiderstand 11 gewährleistet.

Die eigentliche Auswertung des von den Gasreaktionen verursachten Temperaturanstiegs und damit der Widerstandsänderung am Meßwiderstand erfolgt in den Blöcken 19, 20 und 21. Dabei wird in der Differenzbildungsstufe 19 bzw. der zugehörigen Schaltung der am Meßwiderstand 11 auftretende Spannungsabfall laufend ermittelt. Nach der Effektivwertbildung und Gleichrichtung sowie einer geeigneten Offsetverschiebung wird eine von der Reaktionswärme abhängige Spannung erhalten, die nach der Endverstärkung am Ausgang 22 bereitsteht und direkt ein Maß für die Reaktionswärme und damit für den Gehalt an oxidierbaren Gasen ist.

## Patentansprüche

1. Regel- und Auswerteschaltung für einen Wärmetönungssensor, mit wenigstens zwei, einen Spannungsteiler bildenden und von einem Strom durchflossenen temperaturabhängigen Widerständen (11, 12), wobei ein mit einer katalytisch aktiven Schicht beschichteter Widerstand (11) als Meßwiderstand und ein katalytisch inaktiver Widerstand (12) als Referenzwiderstand vorgesehen ist und die Widerstände dem zu untersuchenden Wärmereaktionen auslösenden Medium ausgesetzt werden, mit einer Auswerteschaltung, die dem Spannungsteiler zugeordnet ist, dadurch gekennzeichnet, daß eine regelbare Heizeinrichtung (13) vorgesehen ist, die den temperaturabhängigen Widerständen (11, 12) zugeordnet ist, daß die Regelung der Heizeinrichtung so erfolgt, daß der Wert des Referenzwiderstandes (12) konstant bleibt und die sich einstellende Änderung des Wertes des Meßwiderstandes (11) zur Bestimmung der Wärmetönung ausgewertet wird.

2. Regel- und Auswerteschaltung für einen Wärmetönungssensor nach Anspruch 1, dadurch gekennzeichnet, daß die sich als Folge der Änderung des Wertes des Meßwiderstandes (11) einstellende Änderung des Spannungsabfalls über dem Meßwiderstand (11) ausgewertet wird.

3. Regel- und Auswerteschaltung für einen Wärmetönungssensor nach Anspruch 1 oder 2, dadurch gekennzeichnet, daß der die temperaturabhängigen Widerstände (11, 12) durchfließende Strom ein konstanter Wechselstrom (I) ist.

4. Regel- und Auswerteschaltung für einen Wärmetönungssensor nach Anspruch 3, dadurch gekennzeichnet, daß der Wechselstrom in einem Wechselstromgenerator (17) erzeugt und in einer Spannungsbegrenzungseinrichtung 18 auf einen Höchstwert begrenzt wird.

5. Regel- und Auswerteschaltung für einen Wärmetönungssensor nach einem der Ansprüche 1 bis 4, dadurch gekennzeichnet, daß Heizeinrichtung (13) als ein von einem regelbaren Strom durchflossenen Widerstand ausgebildet ist..

6. Regel- und Auswerteschaltung für einen Wärmetönungssensor nach Anspruch 5, dadurch gekennzeichnet, daß die Heizeinrichtung auf einer Seite an eine Spannungsversorgung und auf der anderen Seite über ein Schaltmittel mit Masse in Verbindung steht.

7. Regel- und Auswerteschaltung für einen Wärmetönungssensor Wärmetönungssensor nach Anspruch 6, dadurch gekennzeichnet, daß das Schaltmittel ein Transistor (14) ist, der in Abhängigkeit von dem am Referenzwiderstand ermittelten Spannungsabfall angesteuert wird.

8. Regel- und Auswerteschaltung für einen Wärmetönungssensor nach einem der vorhergehenden Ansprüche 1 bis 7, dadurch gekennzeichnet, daß der Meß- und/oder der Referenzwiderstand (11, 12) ein NTC- oder PTC-Widerstand ist.

9. Regel- und Auswerteschaltung für einen Wärmetönungssensor nach einem der vorhergehenden Ansprüche 1 bis 8, dadurch gekennzeichnet, daß der Referenzwiderstand (12) eine gegenüber dem zu analysierenden Medium passivierte Oberfläche aufweist oder von einem für dieses Medium undurchlässigen Gehäuse(16) umgeben ist.

## Claims

1. Control and evaluation circuit for a heat of reaction sensor, having at least two temperature-sensitive resistors (11, 12) which form a voltage divider and have a current flowing through them, a resistor (11) coated with a catalytically active layer being provided as a measurement resistor and a catalytically inactive resistor (12) being provided as a reference resistor, and the resistors being exposed to the medium bringing about the thermal reactions to be investigated, having an evaluation circuit which is assigned to the voltage divider, characterized in that a controllable heater (13) is provided, which is assigned to the temperature-sensitive resistors (11, 12), in that the heater is controlled in such a way that the value of the reference resistor (12) remains constant and the change which takes place in the value of the measurement resistor (11) is evaluated in order to determine the heat of reaction.

2. Control and evaluation circuit for a heat of reaction sensor according to Claim 1, characterized in that the change in the voltage drop across the measurement resistor (11), which takes place as a result of the change in the value of the measurement resistor (11), is evaluated.

3. Control and evaluation circuit for a heat of reaction sensor according to Claim 1 or 2, characterized in that the current flowing through the temperature-sensitive resistors (11, 12) is a constant alternating current (I).

4. Control and evaluation circuit for a heat of reaction sensor according to Claim 3, characterized in that the alternating current is produced in an alternating-current generator (17) and is limited to a maximum value in a voltage-limiter device (18).

5. Control and evaluation circuit for a heat of reaction sensor according to one of Claims 1 to 4, characterized in that the heater (13) is designed as a resistor through which a controllable current flows.

6. Control and evaluation circuit for a heat of reaction sensor according to Claim 5, characterized in that the heater is connected on one side to a voltage supply and is earthed through a switching means on the other side.

7. Control and evaluation circuit for a heat of reaction sensor according to Claim 6, characterized in that the switching means is a transistor (14) which drives as a function of the voltage drop measured at the reference resistor.

8. Control and evaluation circuit for a heat of reaction sensor according to one of the preceding Claims 1 to 7, characterized in that the measurement and/or the reference resistor (11, 12) is an NTC or PTC thermistor.

9. Control and evaluation circuit for a heat of reaction sensor according to one of the preceding Claims 1 to 8, characterized in that the reference resistor (12) has a surface passivated with respect to the medium to be analyzed or is enclosed by a casing (16) impermeable to this medium.

## Revendications

1. Circuit de réglage et d'exploitation pour un détecteur de chaleur de réaction, comprenant au moins deux résistances (11, 12) qui forment un diviseur de tension et qui sont fonction de la température en étant parcourues par un courant, une résistance (11) revêtue d'une couche catalytiquement active étant prévue comme résistance de mesure et une résistance catalytiquement inactive (12) étant prévue comme résistance de référence, les résistances étant exposées au milieu qui déclenche des réactions thermiques à contrôler, et comprenant un circuit d'exploitation qui est associé au diviseur de tension,
caractérisé en ce qu'
• il est prévu un dispositif de chauffage réglable (13) qui est associé aux résistances (11, 12) qui sont fonction de la température,
• le réglage du dispositif de chauffage a lieu de telle façon que la valeur de la résistance de référence (12) reste constante et que la variation qui se produit de la valeur de la résistance de mesure (11), soit exploitée pour déterminer la chaleur de la réaction.

2. Circuit de réglage et d'exploitation pour un détecteur de chaleur de réaction, selon la revendication 1,
caractérisé en ce que
la variation de la chute de tension qui se produit par suite de la variation de la valeur de la résistance de mesure (11), est exploitée en fonction de la résistance de mesure (11).

3. Circuit de réglage et d'exploitation pour un détecteur de chaleur de réaction, selon la revendication 1 ou 2,
caractérisé en ce que
le courant qui passe à travers les résistances (11, 12) fonction de la température est un courant alternatif constant.

4. Circuit de réglage et d'exploitation pour un détecteur de chaleur de réaction, selon la revendication 3,
caractérisé en ce que
le courant alternatif est produit dans un générateur à courant alternatif (17) et est limité à une valeur maximale dans un dispositif (18) de limitation de tension.

5. Circuit de réglage et d'exploitation pour un détecteur de chaleur de réaction, selon la revendication 1 à 4,
caractérisé en ce que
le dispositif de chauffage (13) est constitué sous la forme d'une résistance parcourue par un courant réglable.

6. Circuit de réglage et d'exploitation pour un détecteur de chaleur de réaction, selon la revendication 5,
caractérisé en ce que
le dispositif de chauffage est en liaison d'un côté avec une alimentation de tension et, de l'autre côté, est mis à la masse par l'intermédiaire d'un interrupteur.

7. Circuit de réglage et d'exploitation pour un détecteur de chaleur de réaction, selon la revendication 6,
caractérisé en ce que
l'interrupteur est un transistor (14) qui est commandé en fonction de la chute de tension déterminée sur la résistance de référence.

8. Circuit de réglage et d'exploitation pour un détecteur de chaleur de réaction, selon les revendications 1 à 7,
caractérisé en ce que
la résistance de mesure et/ou la résistance de référence (11, 12) est une résistance à coefficient de température négatif CTN ou à coefficient de température positif CTP.

9. Circuit de réglage et d'exploitation pour un détecteur de chaleur de réaction, selon les revendications 1 à 8,
caractérisé en ce que
la résistance de référence (12) présente une surface rendue passive par rapport au milieu à analyser, ou est entourée par un boîtier (16) qui est imperméable à ce milieu.
